# EUROPEAN PATENT SPECIFICATION

(11) **EP 4 388 362 B1**
(45) Date of publication and mention of the grant of the patent: **23.09.2026**
(21) Application number: 22765180.9
(22) Date of filing: 17.08.2022
(51) Int. Cl.: G02B 21/00, G02B 21/08, G02B 21/36, G02B 27/10, H04N 3/14

(54) **VOLUMETRIC IMAGING**
VOLUMETRISCHE BILDGEBUNG
IMAGERIE VOLUMÉTRIQUE

(30) Priority: 17.08.2021 GB 202111782; 12.05.2022 GB 202206966
(43) Date of publication of application: 26.06.2024
(73) Proprietor: Universitetet I Tromsø - Norges Arktiske Universitet, 9019 Tromsø (NO)
(72) Inventor: STRÖHL, Florian, 9019 Tromsø (NO)
(74) Representative: Dehns
(86) International application number: PCT/GB2022/052135
(87) International publication number: WO 2023/021289

(56) References cited:
- US-A1- 2015 192 767
- US-A1- 2018 088 308
- US-A1- 2019 179 127
- US-A1- 2019 331 904
- YORDANOV STOYAN ET AL: "Single-objective high-resolution confocal light sheet fluorescence microscopy for standard biological sample geometries", BIOMEDICAL OPTICS EXPRESS, vol. 12, no. 6, 14 May 2021 (2021-05-14), United States, pages 3372, XP055912823, ISSN: 2156-7085, DOI: 10.1364/BOE.420788
- LOUIS BORIS: "Multiplane Microscopy, a tool to study fast 3D dynamics at the microscale", 26 November 2020 (2020-11-26), XP055912890, Retrieved from the Internet <URL:https://www.emc2020.eu/abstract/multiplane-microscopy-a-tool-to-study-fast-3d-dynamics-at-the-microscale.html>
- ANONYMOUS: "Multifocal plane microscopy - Wikipedia", 5 May 2021 (2021-05-05), XP055912953, Retrieved from the Internet <URL:https://en.wikipedia.org/w/index.php?title=Multifocal_plane_microscopy&oldid=1021610798> [retrieved on 20220414]
- JEONGMIN KIM ET AL: "Vectorial point spread function and optical transfer function in oblique plane imaging", OPTICS EXPRESS, vol. 22, no. 9, 5 May 2014 (2014-05-05), US, pages 11140 - 11151, XP055748210, ISSN: 2161-2072, DOI: 10.1364/OE.22.011140

## Description

### BACKGROUND OF THE INVENTION

The present invention relates to apparatus for volumetric imaging, e.g. for volumetric microscopy of biological samples.

Conventional microscopy involves two-dimensional imaging of a sample. For transmission microscopy, the sample is typically thinly sectioned, e.g. using a microtome. However, in many fields, such as biomedical research, it is advantageous to be able to perform volumetric (three-dimensional) imaging of a thicker sample. This is typically achieved by imaging several two-dimensional image "slices" of different thin volumes within the sample (e.g. at different depths within the sample). The process of producing 2D images of a thick sample (e.g. of different focal planes within the sample) that are substantially free from out-of-focus light is commonly referred to as optical sectioning.

Conventional approaches to optical sectioning include confocal imaging. This uses raster scanning, in which a single point in the sample is illuminated and imaged at a time, with out-of-focus light for each point removed using a physical pinhole. However, this can be slow. Another approach is light-sheet imaging, in which virtual slices of the sample volume are selectively illuminated using a sheet of light extending orthogonal to the imaging axis of the detection objective. However, light-sheet imaging can also be slow, and requires a complex apparatus that may not be suitable for many applications. It is possible to record light from several focal planes simultaneously using light-field imaging systems, but these do not allow for good optical sectioning.

US 2019/0179127 A1 discloses a Multi-Z confocal microscopic imaging system in which an illumination sheet extending in the Z dimension is scanned across a sample, and the detected signal is split into multiple signals corresponding to different depths using reflecting slits positioned upstream of a camera. The system enables the signals to be scanned over a predefined array of camera pixels, thereby producing multiple Z images simultaneously within one frame and enabling 3D images to be acuired at high speed.

"Single-objective high-resolution confocal light sheet fluorescence microscopy for standard biological sample geometries", Yordanov et al., Biomedical Optics Express, 2021 discloses a single-objective light sheet fluorescence system for biological imaging based on axial plane optical microscopy and digital confocal slit detection. A vertical xz plane is imaged and rotated by 90° into a horizontal image that can be projected onto a camera sensor. US 2019/331904 discloses a fluorescent emission HIST microscope which utilizes a highly inclined tile beam that is scanned over a biological sample object. Fluorescence emission from the sample is propagated through a confocal slit into an sCMOS camera supporting a rolling shutter mode. US 2018/0088308 discloses a light sheet microscope comprising a motorized movable stage comprising an optically clear glass plate on which a sample is placed. Illumination and collection paths are separated and oriented orthogonally to each other. The image sensor and the collection objective may be configured in an optical alignment that allows the image sensor to image a 2D light sheet through the sample generated by the illumination path.

A paper by Tsang et al., "Fast, multiplane line-scan confocal microscopy using axially distributed slits," Biomedical Optics Express Vol. 12, pp.1339-1350 (2021), proposes a method of volumetric imaging which involves sweeping illuminating light through a sample to induce fluorescence, and using three reflecting slits to spatially separate fluorescence light from three different depths in the sample. The separated light is directed to three different areas of an image sensor. As the illuminating light is swept over the sample, each of these areas progressively captures a respective two dimensional image of the sample at a particular respective depth. However, using reflecting slits to perform optical sectioning can lead to aberrations, which must be compensated for using bulky corrective optics. This can be difficult to set up, and the physical space taken up by the slits and the corrective optics may limit the number of depths that can practicably be imaged simultaneously.

An improved approach is therefore desired.

### SUMMARY OF THE INVENTION

According to a first aspect there is provided an apparatus for volumetric imaging, comprising:
an illumination assembly arranged to direct light to illuminate a plurality of planes in a sample region sequentially at an illumination rate, each plane extending over a plurality of depths in the sample region;
an image sensor comprising a plurality of sections of pixels and arranged to sense each section of pixels sequentially at a sensing rate; and
a light-receiving assembly arranged to receive light from the sample region and to direct light received from each of said planes in the sample region to a different respective section of said sections of pixels,

wherein the light-receiving assembly comprises a multi-plane optical assembly arranged to receive light from the plurality of depths in the sample region and, for each section of said sections of pixels, to direct light simultaneously from each of the plurality of depths in the respective plane to a different respective subsection of said section; and
wherein the illumination rate is equal to the sensing rate, such that each section of pixels is arranged to sense light from the plurality of depths in the respective plane as the plane is illuminated by the illumination assembly.

According to a second aspect there is provided a method of volumetric imaging, the method comprising:
directing light to illuminate a plurality of planes in a sample region sequentially at an illumination rate, each plane extending over a plurality of depths in the sample region; and
directing light emanating from the sample region to an image sensor, wherein the image sensor comprises a plurality of sections of pixels, wherein light received from each of said planes in the sample region is directed to a different respective section of said sections of pixels, and wherein, for each section of said sections of pixels, light is directed simultaneously from each of the plurality of depths in the respective plane to a different respective subsection of said section;
the image sensor sensing each of said sections sequentially at a sensing rate, wherein the sensing rate is equal to the illumination rate, such that each section of pixels senses light from the plurality of depths in the respective plane as the plane is illuminated.

Thus, it will be understood that the apparatus allows for convenient, fast and high quality capture of volumetric information of a sample region. Light from each depth within each plane is sensed by a separate subsection of a section of pixels, allowing three-dimensional information from the sample region to be captured using only one exposure of the whole image sensor (e.g. requiring only one read-out process). This may allow for faster imaging times than previous approaches which build up a three dimensional image using multiple exposures of an image sensor (e.g. with each exposure corresponding to a different optical section). Faster imaging can be particularly useful when imaging non-static samples, such as cell organelles, individual cells in cell colonies, organoids, or entire tissues, in which important phenomena can happen at short timescales requiring high imaging speeds.

Furthermore, because the illumination rate equals the sensing rate, it can be arranged that only a limited set of the pixels (e.g. a single row or column of pixels) actively senses light as each plane is illuminated, enabling good optical sectioning between the plurality of planes. Each section of pixels senses light (e.g. accumulates electrical charge) when a corresponding plane is illuminated. However, the apparatus is preferably arranged such that each section senses no light from any other plane of the plurality of planes, other than said respective plane. Thus, for each section, the output of the image sensor is not affected by light received when other planes of the plurality of planes are illuminated. The selective sensitivity of the image sensor may be understood as acting equivalently to a "pinhole" at least in some embodiments.

Using selective sensitivity of the image sensor to achieve optical sectioning in this manner may reduce constraints on other optical components of the apparatus such as the illumination assembly and/or the multi-plane optical assembly. For instance, it may not be essential for the multi-plane optical assembly to provide optical sectioning between the plurality of planes (i.e. it may allow light from all across the sample region to be received over the whole image sensor simultaneously, if the whole sample region were to be illuminated at once), allowing smaller and/or cheaper types of multi-plane optical assembly to be used compared to prior art approaches. Whilst such embodiments may result in light from near an illuminated plane spilling onto pixels of the image sensor adjacent the corresponding section, this is acceptable because these pixels are sensed at a different time. Multi-plane optical assemblies that do not need to provide inherently for optical sectioning may be physically smaller than other options and/or may not require corrective optics to compensate for aberrations, allowing a greater number of depths to be imaged simultaneously, increasing the quality of volumetric imaging. In some embodiments the multi-plane optical assembly is arranged to direct light simultaneously from each of at least four depths, at least eight depths, at least twelve depths or even twenty depths or more, to different respective subsections of the image sensor.

The sample region may contain a sample. The sample may fully or partially occupy the sample region, and may extend beyond the sample region. The apparatus may comprise a surface (e.g. of a slide or a vessel) for holding a sample. The surface may define a boundary of the sample region. In some embodiments, the sample region may contain a biological sample. The sample may comprise a fluorescent marker.

The image sensor is preferably an electronic image sensor such as a CMOS or CCD sensor. It is preferably a two-dimensional (e.g. rectangular) sensor. The image sensor may be arranged to selectively sense each section of pixels through the use of a physical shutter mechanism and/or electronic shutter circuitry. It may comprise a physical rolling shutter or an electronic rolling shutter. For instance, the image sensor may comprise a physical shutter arranged to expose only one section at a time to incident light from the sample region. However, preferably the image sensor comprises an electronic shutter arranged to selectively sense from pixels in each section of the image sensor in sequential electronic-shutter periods. These periods are preferably non-overlapping in time. For instance, in the case of a CMOS or CCD sensor, the image sensor may be arranged to allow the sections of pixels to accumulate charge only in respective electronic-shutter periods. (However, it's possible that one or more or all sections may be read out in a single read-out operation.)

The multi-plane optical assembly may comprise a multi-plane prism or a multi-plane diffraction grating. A multi-plane prism may be used to image reliably up to eight depths simultaneously, although more may be possible. The number of depths that can be imaged simultaneously using a multi-plane diffraction grating may only be limited by the number of pixels in the image sensor.

The apparatus may be arranged to volumetrically image the sample region repeatedly over time, i.e. to generate image data representing a time series of volumes of the sample region. This may enable the apparatus to capture motion within a target sample, e.g. dynamic biological processes. The apparatus may be arranged to capture the whole sample region within a single exposure of the image sensor, such that the repetition rate is only limited by the readout speed (frame rate) of the image sensor. In some embodiments the apparatus is operable to record over 10 volumes per second, over 20 volumes per second, over 50 volumes per second, over 100 volumes per second or even up to 1000 or 1500 volumes per second or more. The apparatus may therefore be particularly useful for capturing biological processes that happen in three dimensions and on relatively short timescales.

The light-receiving assembly may comprise an objective lens assembly arranged to pass light emanating from the sample region (e.g. reflected light or fluorescence light) directly or indirectly to the multi-plane optical assembly. The objective lens assembly preferably comprises at least one objective lens. The illumination assembly may comprise a separate objective lens. However, in some embodiments the objective lens assembly also forms part of the illumination assembly and is also arranged to pass (e.g. focus or direct) light from the illumination assembly into the sample region. Using the same objective lens assembly for illumination and imaging avoids the need to place separate illumination and imaging objectives in close proximity, which can limit the physical size of both. The objective lens assembly may therefore have a higher numerical aperture (NA) than would be possible with a separate objective. This may improve both imaging resolution (which scales linearly with NA) and photon collection efficiency (which scales with NA²). Using the same objective lens for illumination and imaging may also allow the apparatus to be used with a wider variety of sample mounts (e.g. compared to conventional light-sheet microscopy which uses two objectives), improving the variety of microscopy applications in which the apparatus may be used.

The plurality of planes may be parallel planes. They may each be parallel to an imaging axis of the objective lens. They may be spaced evenly or unevenly within the sample region. The spacing of the planes may be selected based on a desired imaging resolution and/or an expected scale of structures of interest in the sample.

In a set of embodiments at least one of the plurality of planes is parallel to an imaging axis of the objective lens assembly.

In a set of embodiments, at least one of the plurality of planes is inclined to an imaging axis of the objective lens assembly. In other words, one or more of the planes may be oblique to the imaging axis of the objective lens. For instance, at least one plane may be inclined at an angle of at least 1°, at least 5°, at least 10° or at least 20° or more. In a set of embodiments the at least one plane is inclined at 30° (or approximately 30°) to the imaging axis of the objective lens. In some embodiments at least one plane may be inclined at a greater angle, e.g. 45° or more. The angle at which a plane is inclined may be selected based on a maximum permitted thickness of the illuminating light (in a direction orthogonal to the illuminating plane). The angle may be selected based on a target illumination depth in the sample region (e.g. the angle may be selected such that the light extends to a target depth in the sample region or through the entire sample region). The angle may be selected to be the highest angle to the imaging axis at which the illuminating light extends to a target depth in the sample region without exceeding a given thickness.

Each of the plurality of planes may be inclined to the imaging axis of the objective lens. In such embodiments, the plurality of planes may be parallel (i.e. with each plane inclined at the same angle to the imaging axis).

Using one or more inclined planes may enable improved optical depth sectioning of the sample and improved axial resolution performance (i.e. a reduction in the minimum dimension of resolvable features in the axial direction). Using an inclined plane causes light from the different depths in the sample to be spread along a direction orthogonal to the imaging axis (i.e. with less overlap between light emanating from different depths in the sample). Because each section of pixels senses light from a respective (inclined) plane, light from different depths in a given axial plane of the sample region is sensed separately by the sensor. This improves optical sectioning in the axial direction and improves achievable axial resolution. When illuminating each of the plurality of planes, the illumination assembly may direct light to a volume around the plane, which may be substantially cuboid in shape. In embodiments where one or more planes is inclined to the imaging axis, the volume around each inclined plane may be substantially rhomboid in shape. However each such volume is preferably thin (e.g. compared to the overall thickness of the sample) in a direction orthogonal to the plane.

A multi-plane optical assembly for use with axial planes may be adapted for use with inclined planes by adjusting individual components of the multi-plane optical assembly to direct the light to the necessary subsection of the image sensor. Alternatively, an entire multi-plane optical assembly configured for use with axial illumination planes may be rotated to handle inclined planes. For instance, a multi-plane optical assembly configured to direct light from a plurality of depths in an axial plane to a single row or column on an image sensor may be rotated so as to direct light from a plurality of depths in an inclined plane to the same single row or column on the image sensor.

The light sensed by each section (i.e. for each plane) may comprise or consist of a two-dimensional projection, in a direction orthogonal to the respective plane, of light produced in a respective volume that contains the plane within the sample region. These volumes are preferably non-overlapping. A thickness of the volumes in a direction orthogonal to the plane (which may depend on the spacing of the illuminated planes) may be selected based on a desired imaging resolution and/or an expected scale of structures of interest in the sample. The thickness may depend, at least in part, on a width of a pixel of the image sensor and/or other aspects such as the wavelength of the illuminating light and/or properties of the illumination or light-receiving assemblies such as a numerical aperture and/or magnification. The illumination assembly may be arranged to fill each of these volumes with light at a respective instant, and/or to sweep a beam or sheet (which may be narrower than the volume) over or through the volume. Fluorescence may result in light emanating from points in a volume for a time even after illumination of the points has ceased.

Each subsection of the image sensor may receive light from a respective range of depths around each of the plurality of depths, rather than only from a single depth of the plurality depth.

The illumination assembly (e.g. in cooperation with an objective lens assembly) may be arranged to generate a light sheet extending parallel (which may include substantially parallel) to an imaging axis of the objective lens assembly (i.e. in an axial direction). In such embodiments the plurality of planes may comprise substantially axial planes (i.e. where a normal to each plane is orthogonal to the imaging axis).

The illumination assembly (e.g. in cooperation with an objective lens assembly) may be arranged to generate a light sheet that is inclined to an imaging axis of the objective lens assembly (i.e. in an oblique direction). In such embodiments the plurality of planes may comprise substantially inclined planes (i.e. where a normal to each plane is oblique to the imaging axis).

The illumination assembly may be arranged to sweep or step the light sheet across the sample region (e.g. to illuminate a plurality of parallel axial planes or a plurality of inclined planes). In some embodiments, continuous sweeping may be preferred, as it may enable particularly fast illumination, which may support a high frame rate.

The illumination assembly may comprise a light source (e.g. an LED or laser), or may alternatively receive light from a separate light source. The illumination assembly may comprise one or more controllable optical components for selectively illuminating different planes in the sample region. For instance, the illumination assembly may comprise a physically controllable component such as a steerable mirror, and/or an electronically controllable component such as a spatial light modulator.

The illumination assembly may comprise one or more lenses arranged to modify light from a light source. For instance, the illumination assembly may comprise one or more lenses (e.g. one or more cylindrical lenses, scan lenses and/or tube lenses) arranged to create a light sheet from a light beam (e.g. a Gaussian beam from a laser). The illumination assembly may be arranged to produce an inclined light sheet by directing light from a light source through an off-axis portion of a lens (i.e. away from an imaging axis of the lens, e.g. on one side of lens).

The sections of pixels may comprise any distinct sets of pixels of the image sensor. However, in some embodiments it may advantageous for the sections to consist of a respective set of pixels that are arranged contiguously across the image sensor (e.g. as a single line or rectangle). This may allow the complexity of the image sensor and/or optical components of the apparatus to be reduced. In some such embodiments one or more pairs of successively-sensed sections are adjacent each other (i.e. not separated by an intervening pixels). This may further reduce complexity and facilitate fast imaging. In a preferred set of embodiments, one or more or each of the sections of pixels comprises one or more lines (e.g. rows or columns) of pixels, e.g. with adjacent lines or sets of lines being sensed sequentially. In such embodiments the multi-plane optical assembly (e.g. in cooperation with an objective lens assembly) is arranged to direct light produced in one or more corresponding planes to one or more lines of pixels (i.e. to vectorise the plane). In a particularly preferred set of embodiments, each section comprises only a respective single line of pixels (e.g. a respective column), which may all be parallel and which may all span the image sensor (e.g. a whole height of the sensor). In some embodiments the image sensor is a line-scan image sensor, arranged to sense one line of pixels at a time at the sensing rate.

In some sets of embodiments, where the plurality of planes are inclined and parallel, the respective sections of pixels on the sensor may be displaced relative to sections used for axial illumination, so as to match an inherent sensing pattern on the sensor. Each section of pixels may comprise a set of one or more lines of pixels, with a start of each set being offset from the previous set. For instance, when a plurality of inclined and parallel planes is used and the image sensor is arranged to sense sequentially lines (e.g. rows) of pixels, the plurality of sections of pixels may comprise offset lines (or sets of lines) with the offset corresponding to the angle of inclination. Image data output from the sensor may then be more easily processed into an three-dimensional image of the sample region.

The apparatus may comprise a processing system, such as a computer, for receiving image data from the image sensor. It may store and/or process the received image data, e.g. to perform sub-resolution microscopy processing of the image data. It may process the image data to generate a three-dimensional image data set. It may comprise a display (e.g. a monitor). The apparatus may be configured to render for display and/or to display a three-dimensional image of the sample region, although this may be done by a separate device. The apparatus may be configured to inherently capture two-dimensional images of the planes with different sections of the image sensor, which can then be stacked to build up a three-dimensional image data set of the sample region. However, in some embodiments a conversion step may be required to convert raw pixel data collected by the image sensor into a three dimensional image data set of the sample region, e.g. in embodiments where light from each plane is sensed by a line of pixels (i.e. where the plane is "vectorised" into a line). This may comprise rearranging data from the pixels into a different layout, but may also or alternatively comprise distorting (e.g. stretching, compressing, rotating) pixel data in one or more dimensions.

Each subsection of pixels may consist of any distinct set of pixels within their respective sections. However, the subsections preferably consist of respective contiguous sets of pixels (i.e. arranged in an unbroken sequence). In some embodiments, subsections corresponding to adjacent depths in the sample region are adjacent within each section of pixels on the image sensor. For instance, in an embodiment where the sections of pixels are respective single or multiple lines of pixels, in a first sensor dimension (e.g. along an X axis), the subsections may comprise adjacent parts of each line, such that the subsections are arranged in respective stripes in a second, orthogonal sensor dimension (e.g. along a Y axis).

The apparatus may be arranged to perform fluorescence volumetric microscopy. The illumination assembly may be arranged to excite fluorescence in a sample within the sample region as the planes are illuminated, and the multi-plane optical assembly and the image sensor may be arranged to direct and sense fluorescence light from the illuminated planes.

Because the illumination rate equals the sensing rate, light from each plane of the plurality of planes is captured by a different corresponding section of pixels (i.e. the image sensor senses the sections of pixels at the same rate that the illumination assembly illuminates the plurality of planes). Thus it may take the same time period to illuminate all of the plurality of planes across the sample region as it takes to sense all of the sections of the image sensor.

In some embodiments the apparatus may be arranged to utilise only a portion of the image sensor when imaging the sample region (i.e. operating in a "cropped sensor mode"). This may be to increase the frame rate and/or to optimise the shape or size of the sections of pixels or the sample region. For instance, a physical sensor having 4000 lines of pixels and may be arranged to use all of them to image the sample region in a first mode, but to use only 3000 lines to receive light from 3000 illuminated planes that span 75% of a width of the sample region in a second mode.

The apparatus may use a single image sensor to image the whole sample region. However, in some embodiments the apparatus may comprise a second image sensor also comprising a plurality of sections and arranged to sense sequentially each section of pixels at the sensing rate. The multi-plane optical assembly may be additionally arranged to direct light simultaneously from each of a second plurality of depths in the sample region to a respective subsection of each section of pixels of the second image sensor. The multi-plane optical assembly may be arranged to direct light from different depths to the first and second image sensors. In some embodiments the multi-plane optical assembly is arranged to direct light from a first set of one or more depths to (preferably only) the first image sensor, and light from a second set of one or more depths to (preferably only) the second image sensor. The first and second sets of depths may be adjacent sets of depths (e.g. the first set comprising depths A, B, C, D and the second set comprising depths E, F, G, H, where A is deepest and H is shallowest, or vice versa) or they may be interleaved (e.g. the first set comprising depths A, C, E, G and the second set comprising depths B, D, F, H). By splitting the light from the sample region across two image sensors, optical sectioning between depths and/or imaging speed and/or imaging resolution may be improved. This approach could be extended to have an apparatus comprising three or more image sensors in some embodiments.

Features of any aspect or embodiment described herein may, wherever appropriate, be applied to any other aspect or embodiment described herein. Where reference is made to different embodiments, it should be understood that these are not necessarily distinct but may overlap.

### BRIEF DESCRIPTION OF THE DRAWINGS

One or more non-limiting examples will now be described, by way of example only, and with reference to the accompanying figures in which:
Figure 1 is a schematic view of an apparatus for volumetric microscopy according to an embodiment of the invention;
Figure 2 is another schematic view of the apparatus for volumetric microscopy;
Figure 3 is a schematic diagram to illustrate how light is transferred to an image sensor by the apparatus;
Figure 4 is a schematic view of an apparatus for volumetric microscopy according to another embodiment of the invention;
Figure 5 shows a multi-plane prism for use in embodiments of the invention;
Figure 6 is a schematic view of an apparatus for volumetric microscopy according to another embodiment of the invention;
Figure 7 is a schematic diagram comparing axial and inclined illumination techniques;
Figure 8 is a schematic view of multi-plane optical assemblies; and
Figure 9 shows example optical transfer functions for axial and inclined illumination.

### DETAILED DESCRIPTION

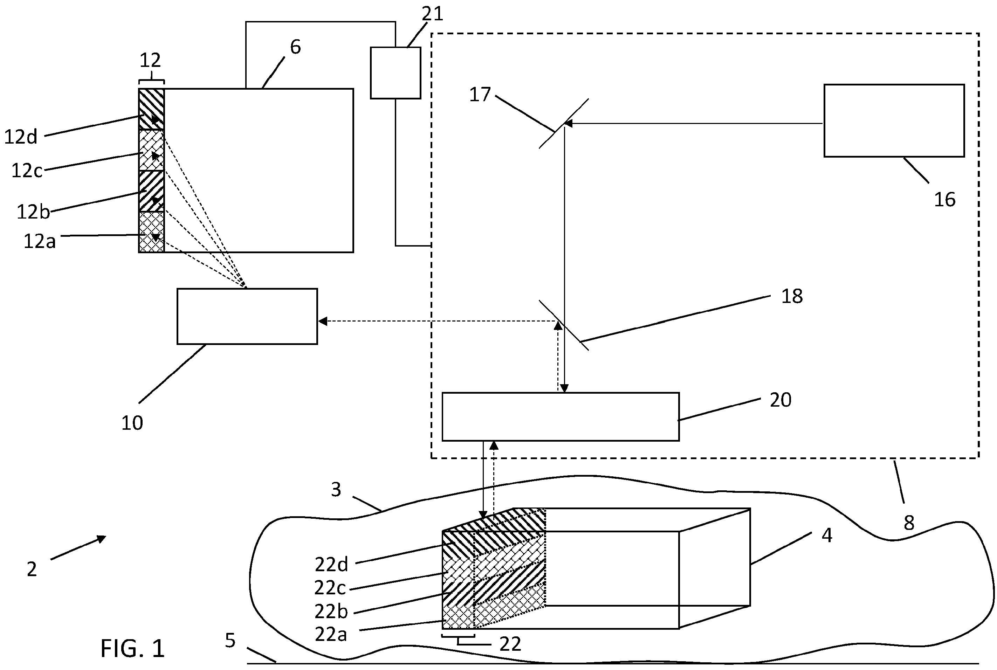

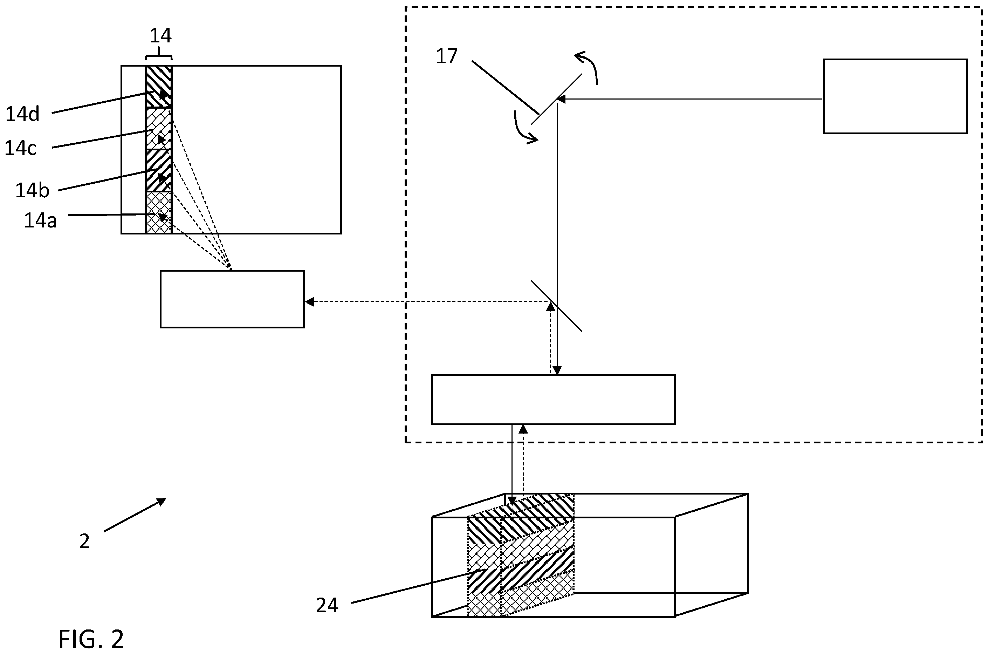

As shown in Figures 1 and 2, an apparatus for volumetric microscopy 2 of a sample region 4 occupied by a sample 3 comprises an image sensor 6, a combined illumination-and-collection assembly 8 and a multi-plane optical assembly 10 (e.g. a multi-plane prism). The sample 3 (here shown resting on a horizontal surface 5, such as a slide) may be a fluorescently-labelled biological sample, although the apparatus 2 may be used or adapted to image a wide variety of different objects, and potentially at larger scales than microscopic resolution.

The image sensor 6 in this embodiment is a two-dimensional CMOS image sensor that comprises a plurality of pixels, arranged in rows and columns. As explained in more detail below, the image sensor 6 is arranged to sense each column (embodying respective "sections") of pixels sequentially at a sensing rate. Sensing here may refer to the period of time over which a pixel is configured to accumulate charge, before the pixel is read out.

Figure 1 shows a first column 12 of pixels being exposed and sensed and Figure 2 shows a second column 14 of pixels, adjacent the first column 12, being exposed and sensed at a later time. The first and second columns 12, 14 (as with all the other columns) each comprise four sub-sections 12a, 12b, 12c, 12d, 14a, 14b, 14c, 14d. (The division into sub-sections is not a physical attribute of the sensor 6 itself, but relates instead to how the image data from the sensor 6 is processed.)

The illumination assembly 8 comprises a light source 16 (e.g. a laser), a moveable mirror 17, a beam splitter 18 and an objective lens assembly 20. It may optionally include further lenses, mirrors, filters, etc. The illumination-and-collection assembly 8 is arranged to illuminate the sample region 4 with a narrow light sheet extending in an axial direction parallel to an imaging axis of the objective lens assembly 20. The position of the light sheet in the sample region 4 is varied by moving the movable mirror 17. The movable mirror 17 is positioned in a Fourier plane of the optical path such that rotating the mirror 17 translates the light sheet laterally (i.e. in a direction normal to the sheet) across the sample region 4. In other words, by moving the movable mirror 17, the illumination-and-collection assembly 8 is arranged to sweep the axial light sheet smoothly across (i.e. through) the sample region 4 so as to illuminate a continuum of axially-extending planes through the sample region. Within this continuum, a plurality of distinct axially-extending planes in the sample region can be considered to be sequentially illuminated at an illumination rate that is equal to the sensing rate. In alternative embodiments, the light sheet could be moved in a series of discrete steps, at an illumination rate that is equal to the sensing rate.

A computer system 21 controls an actuator of the movable mirror 17. It also receives and processes image data from the image sensor 6, in order to obtain microscopy data for the sample 3. It may, in some embodiments, use computation nanoscopy processing to provide super-resolution imaging of the sample 3.

Figure 1 shows the illumination-and-collection assembly 8 illuminating a first plane 22 in the sample region 4 with the light sheet and Figure 2 shows the illumination-and-collection assembly 8 at a later time illuminating a second plane 24 in the sample region 4 with the light sheet.

The objective lens assembly 20 is also arranged to capture light produced in the sample region 4 (e.g. scattered or fluoresced light from an illuminated plane through the sample 3) and direct it to the multi-plane optical assembly 10 via the beam splitter 18. The beam splitter 18, objective lens assembly 20 and multi-plane optical assembly 10 therefore together provide a light-receiving assembly (which may optionally include further lenses, mirrors, filters, etc.). The multi-plane optical assembly 10 separates light from four different depth bands in the sample region 4 and directs these to different respective subsections of pixels of the image sensor 6. For instance, Figure 1 shows how light from a deepest depth 22a in the first plane 22 (i.e. furthest from the objective lens assembly 20) is directed to the first subsection 12a, whereas light from the shallowest depth 22d in the first plane 22 is directed to the fourth subsection 12d. The lower and upper intermediate depths 22b, 22c are directed to the second 12b and third 12c subsections respectively.

As mentioned above, in use the illumination-and-collection assembly 8 sweeps an illuminating light sheet across the sample region 4 so as to illuminate sequentially a plurality of planes in the sample. The image sensor 6 senses each of the columns of pixels sequentially at an equal sensing rate, such that light from each of these planes is sensed by a different respective column of pixels. Any light from the sample region 4 that falls on parts of the sensor 6 outside the one column that is actively being sensed (i.e. that falls on columns that are not accumulating charge), will not be imaged. This results in precise vertical sectioning of the sample region 4. Each pixel column may receive some additional light from a narrow volume around the illuminated plane, due to the width and/or motion of the illumination sheet (and potentially due to a non-zero decay time of any fluorescent markers in the sample 3). The collection optics and the width of the pixels may also affect the sectioning. However, these can be configured so as to limit the thickness of the volume (i.e. vertical slice) sensed by each column in order to give precise vertical sectioning.

Figures 1 and 2 illustrate the illumination and sensing of two planes 22, 24 in the sample region 4. At a first time the illumination-and-collection assembly 8 illuminates the first plane 22 as shown in Figure 1. Light produced in the first plane 22 as a result of the illumination (e.g. by scattering or by fluorescence) is directed via the objective lens assembly 20 and the multi-plane optical assembly 10 to the first column 12 of pixels of the image sensor. The multi-plane optical assembly 10 directs light from different depths in the first plane 22 to different subsections 12a, 12b, 12c, 12d of the first column 12. The first column 12 of pixels thus records an image of the first plane 22 of the sample region 4.

At a second, subsequent, time the illumination-and-collection assembly 8 illuminates the second plane 24 as shown in Figure 2. Light produced in the second plane 24 (e.g. by scattering or by fluorescence) is directed via the objective lens assembly 20 and the multi-plane optical assembly 10 to the second column 14 of pixels of the image sensor. The multi-plane optical assembly 10 directs light from different depths in the second plane 24 to different subsections 14a, 14b, 14c, 14d of the second column 14. The second column 14 of pixels thus records an image of the second plane 24 of the sample region 4.

This process continues with further planes in the sample region 4 being illuminated and light therefrom sensed by further columns of pixels in the image sensor 6 until the whole sample region 4 has been imaged. The apparatus 2 thus captures a three-dimensional (volumetric) image (i.e. 3D data set) of the sample region 4 in a single frame of the image sensor 6. The process of sweeping a light sheet across the sample region 4 and sensing the resulting light can be repeated at a high frame rate (e.g. up to 1500 times per second or faster, depending on a maximum electronic shutter rate of the image sensor 6) to record activity in the sample region 4 in three dimensions and at high speed. If the image sensor 6 is able to reverse the direction of its rolling shutter, the light sheet may be swept back and forth with image data being collected in both directions; otherwise, the light sheet may be swept in the same direction for each frame.

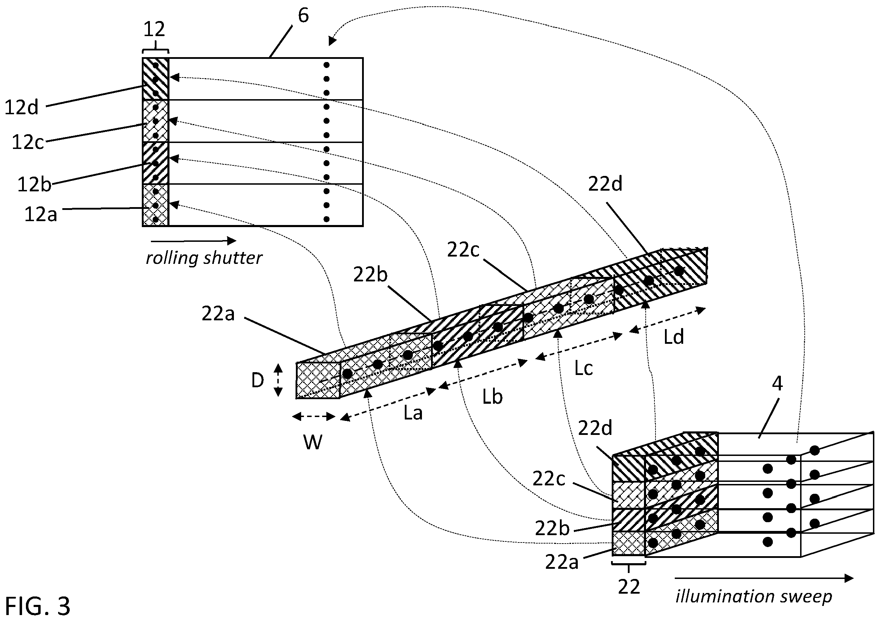

Figure 3 is a schematic diagram illustrating how light emanating from the sample region 4 is translated onto pixels of the image sensor 6.

For each of the four distinct depths 22a-22d in the sample region 4, the apparatus 2 translates light emanating from and around points at that depth to a respective one of four horizontal stripes (subsections) of pixels spanning part or all of the width of the image sensor 6. At any one time, however, only one slice through the sample region 4 is illuminated, and so minimal light arrives on the sensor 6 outside of a vertical stripe corresponding to the illumination sheet. In particular, light emanating from along a respective horizontal line, coincident with the illumination plane, is received at respective pixels along a respective subsection 12a-12d of a single column of pixels.

The multi-plane optical assembly 10 causes light from the four depths 22a-22d to be joined end-to-end so as to form a single line up the sensor 6. In the simplified example of Figure 3, the single-pixel-wide column 12 is shown as containing twelve pixels-three in each subsection 12a-12d. In practice, however, there may be hundreds of pixels in each of the four sections of a single column. Each of the twelve pixels in this example receives light emanating from the vicinity of a respective one of twelve points in the sample region 4 that are being actively illuminated by the illumination plane. The width W and the depth D of this vicinity around each point in the sample region 4 may depend, at least in part, on the collection optics of the apparatus 2. The width W may also depend, at least in part, on the width of the pixels of the image sensor 4 and/or other aspects such as the wavelength of the illuminating light and/or properties of the combined illumination-and-collection assembly 8 and the multi-plane optical assembly 10 such as numerical aperture and/or magnification.. Although the depths 22a-22d are here shown as being contiguous (i.e. touching), in some embodiments there may be gaps between them from which no light is sensed (i.e. recorded) by the sensor 6. The lengths La, Lb, Lc, Ld of the horizontal lines through the sample region 4, that are sampled at each depth 22a-22d, may depend on the collection optics, and on the height and resolution of the image sensor 6. The lengths L may be the same for all points in the sample region 4 that are illuminated by the illumination plane (e.g. La=Lb=Lc=Ld), but this is not essential. Similarly, the widths W may be the same for all points, and the depths D may be the same for all points, but this is not essential. The widths W, depths D, and lengths L may be the same across the region 4 and may additional be equal to each other, i.e. W=D=L, such that each pixel samples light from a respective cubic vicinity around a point in the sample region. However, in other examples, the widths W, depths D and lengths L are not equal to each other, and pixels can sample light from non-cubic vicinities around each point in the sample region. For instance, the depths D may be larger than the widths W and/or lengths L.

In some modes of operation, only a sub-area of the image sensor 6 is used to capture images-e.g. only a central subset of the columns. This may allow a higher frame rate to be used in some modes.

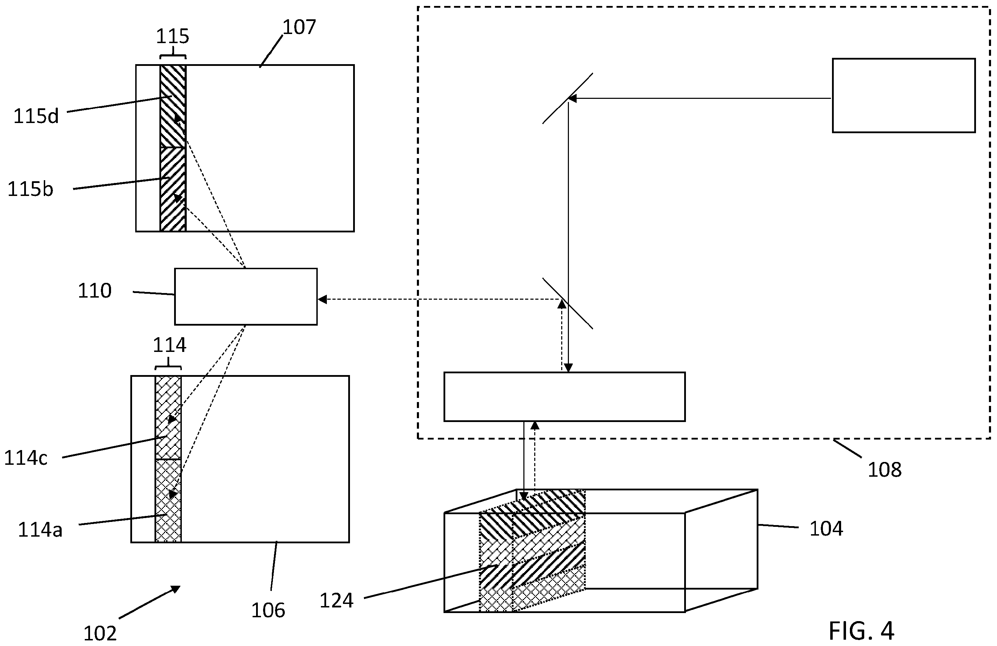

Figure 4 shows another apparatus for volumetric microscopy 102. The structure of the apparatus 102 shown in Figure 4 is largely the same as that of the apparatus 2 shown in Figures 1 and 2, comprising an illumination-and-collection assembly 108 and a multi-plane optical assembly 110 for imaging a sample region 104 containing a sample (not shown),. However the apparatus 102 comprises a first image sensor 106 and a second image sensor 107 rather than a single image sensor 6.

The operation of the apparatus 102 is largely the same as that described above with reference to Figures 1 and 2. However, the multi-plane optical assembly 110 (e.g. a multi-plane prism 400 as described below) directs light from first and third depths in an illuminated plane 124 of the sample region 104 to different subsections 114a, 114c of a column 114 of the first image sensor 106, and directs light from second and third depths in the sample region 104 to different subsections 115b, 115d of a column 115 of the second image sensor 107. By splitting light from the illuminated plane 124 between two image sensors 106, 107, the area of each sensor 106, 107 used to sense light from each depth may be increased, improving the resolution of imaging.

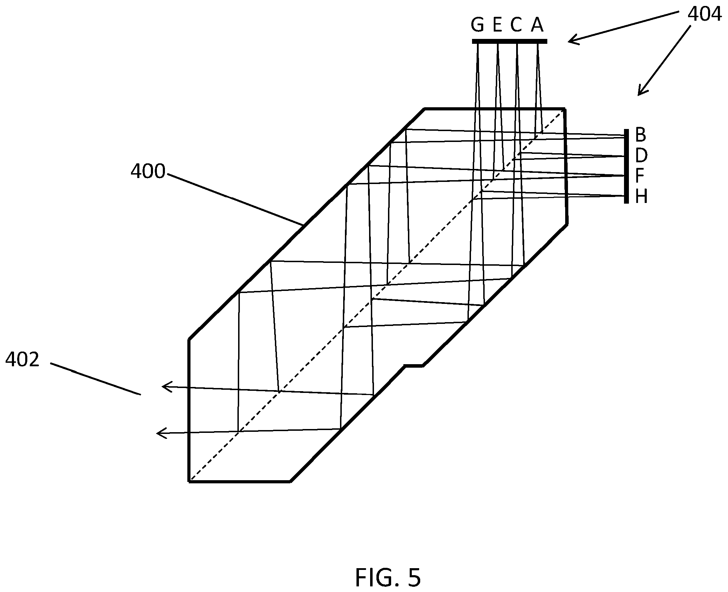

Figure 5 shows a multi-plane prism 400 for use as a multi-plane optical assembly in embodiments of the invention. The prism 400 receives input light 402 comprising light from a plurality of depths A, B, C, D, E, F, G, H in a sample region, and produces output light 404 comprising the input light 402 separated into different components corresponding to the different depths (i.e. different depth ranges). The prism 400 is designed to vectorise axial planes into a strip with Nyquist-optimal spacing, for projection onto a single exposed line of an image sensor 6. The prism 400 shown in Figure 5 splits the output light 404 into two different portions, so that light from depths A, C, E and G may be sent to a first image sensor 106 and light from depths B, D, F and H may be sent to a second image sensor 107. Other prisms may send light to one portion, for use in apparatus 2 that comprises only a single image sensor 6.

In other embodiments, a diffraction grating may be used as a multi-plane optical assembly.

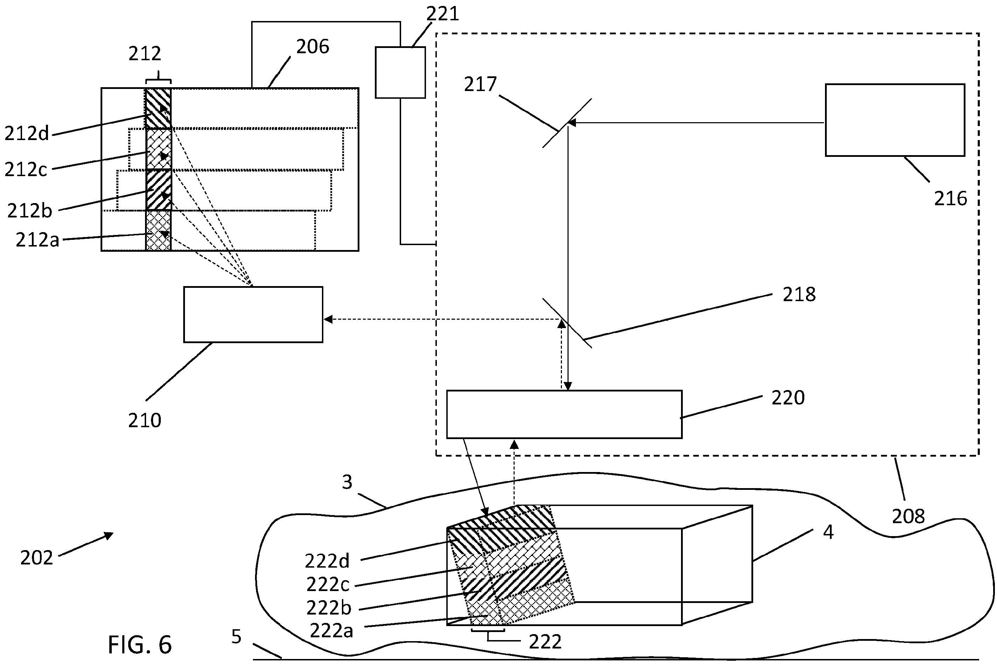

Figure 6 shows another apparatus 202 for volumetric microscopy of the sample region 4. The apparatus 202 comprises an image sensor 206, a combined illumination-and-collection assembly 208 and a multi-plane optical assembly 210 (e.g. a multi-plane prism). As previously, the sample 3 is shown resting on a horizontal surface 5 such as a slide and may be a fluorescently-labelled biological sample.

The image sensor 206 is arranged to sense a column (embodying respective "sections") of pixels sequentially at a sensing rate. Figure 6 shows a column 212 of pixels being exposed and sensed. The column 212 comprises four sub-sections 212a, 212b, 212c, 212d,

The illumination assembly 208 comprises a light source 216 (e.g. a laser), a moveable mirror 217, a beam splitter 218 and an objective lens assembly 220. It may optionally include further lenses, mirrors, filters, etc. The illumination-and-collection assembly 208 is arranged to illuminate the sample region 4 with a narrow light sheet extending at an oblique angle to an imaging axis of the objective lens assembly 220 (an inclined light sheet). The position of the light sheet in the sample region 4 is varied by moving the movable mirror 217. The movable mirror 217 is positioned in a Fourier plane of the optical path such that rotating the mirror 217 translates the light sheet laterally (i.e. in a direction normal to the imaging axis) across the sample region 204. In other words, by moving the movable mirror 217, the illumination-and-collection assembly 208 is arranged to sweep the oblique light sheet smoothly across (i.e. through) the sample region 4 so as to illuminate a continuum of oblique planes through the sample region. Within this continuum, a plurality of distinct oblique planes in the sample region can be considered to be sequentially illuminated at an illumination rate that is equal to the sensing rate. In alternative embodiments, the light sheet could be moved in a series of discrete steps, at an illumination rate that is equal to the sensing rate.

A computer system 221 controls an actuator of the movable mirror 217. It also receives and processes image data from the image sensor 206, in order to obtain microscopy data for the sample 3. It may, in some embodiments, use computation nanoscopy processing to provide super-resolution imaging of the sample 3.

The objective lens assembly 220 is also arranged to capture light produced in the sample region 4 (e.g. scattered or fluoresced light from an illuminated plane through the sample 3) and direct it to the multi-plane optical assembly 210 via the beam splitter 218. The multi-plane optical assembly 210 separates light from four different depth bands in the sample region 4 and directs these to different respective subsections of pixels of the image sensor 6. Because the illumination planes are inclined, light from different depths is spread in a direction orthogonal to the imaging axis of the objective lens assembly 220. This facilitates the effective separation of light from the different depths (i.e. effective axial optical sectioning) and improves axial resolution performance. Figure 6 shows how light from a deepest depth 222a in the first plane 222 (i.e. furthest from the objective lens assembly 220) is directed to the first subsection 212a, whereas light from the shallowest depth 222d in the first plane 222 is directed to the fourth subsection 212d. The lower and upper intermediate depths 222b, 222c are directed to the second 212b and third 212c subsections respectively.

As the oblique illumination light is swept through the sample, the sensor 206 builds up image data of the whole volume in a single exposure. Because the illumination planes 222 are inclined to the imaging axis but still correspond to vertical sections of the sensor 206 (columns), the regions of the sensor corresponding to data from different depths in the sample are slightly offset (shown with dotted lines in Figure 6).

Other than the inclined nature of the illumination planes, the operation of the apparatus 202 is similar to that of the apparatus 2 described above. The illumination-and-collection assembly 208 sweeps an inclined light sheet across the sample region 4 so as to illuminate sequentially a plurality of parallel inclined planes in the sample. The image sensor 206 senses each of the columns of pixels sequentially at an equal sensing rate, such that light from each of these planes is sensed by a different respective column of pixels. The apparatus 202 thus captures a three-dimensional image of the sample region 4 in a single frame of the image sensor 206

Any light from the sample region 4 that falls on parts of the sensor 206 outside the one column that is actively being sensed (i.e. that falls on columns that are not accumulating charge), will not be imaged. This results in precise vertical sectioning of the sample region 4. At any given moment, the sensor 206 is only sensing light from the rhomboid region of the sample 3 illuminated by the current inclined illumination plane. As a result, light from different depths in a given axial plane of the sample 3 is sensed at different times, improving depth sectioning and axial resolution.

Each pixel column may receive some additional light from a narrow volume around the illuminated plane, due to the width and/or motion of the illumination sheet (and potentially due to a non-zero decay time of any fluorescent markers in the sample 3). The collection optics and the width of the pixels may also affect the sectioning. However, these can be configured so as to limit the thickness of the rhomboid volume sensed by each column in order to give precise sectioning.

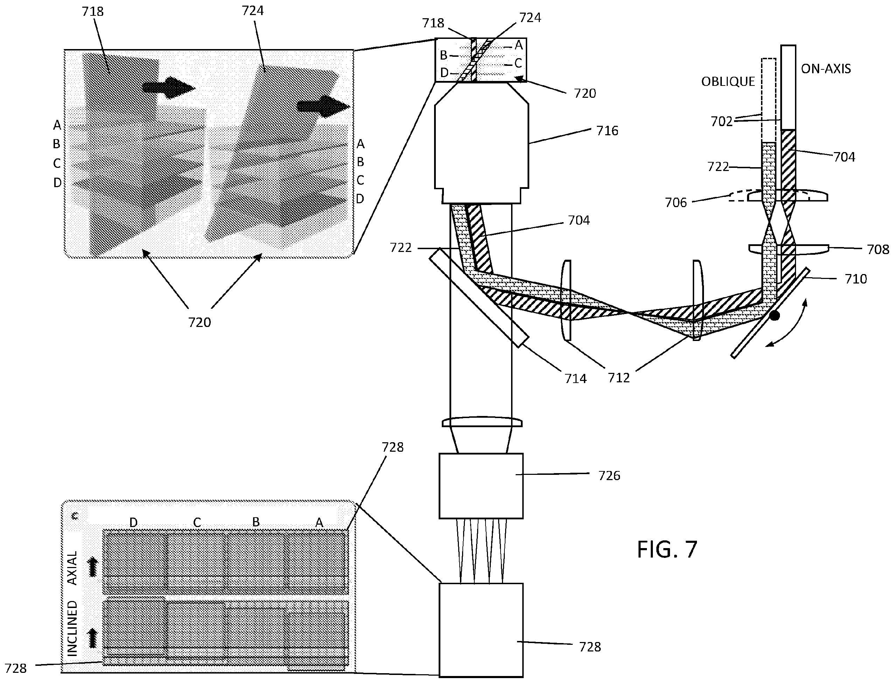

Figure 7 compares the operation of an apparatus for volumetric microscopy that uses axial plane illumination (e.g. the apparatus 2 described above with reference to figures 1-5) and the operation of an apparatus for volumetric microscopy that uses inclined plane illumination (e.g. the apparatus 202 described above with reference to Figure 6). For the aid of understanding, both options are illustrated together in Figure 7. In practice only one illumination approach would be used at a time.

For axial plane illumination, a laser 702 generates a first beam 704 which passes through a cylindrical lens 706 and then through the centre (on-axis) of a scan lens 708. The beam 704 is reflected by a moveable mirror 710, passes through two further lenses 712 and is reflected from a dichroic mirror 714 before entering an objective lens assembly 716. This assembly of lenses and mirrors transforms the first beam 704 into an axial light sheet 718 that illuminates an axial plane in a sample region 720. The axial light sheet 718 extends over a plurality of depths in the sample, with four example depths labelled A, B, C and D.

For inclined plane illumination, the laser 702 generates a second beam 722 which passes through the cylindrical lens 706 and then through the scan lens 708. However, it passes through the scan lens 708 off-axis (i.e. away from the centre of the lens). The beam 722 is reflected by the moveable mirror 710, passes through the two further lenses 712 and is reflected from the dichroic mirror 714 before entering the objective lens assembly 716. This assembly of lenses and mirrors transforms the second beam 722 into an oblique light sheet 724 that illuminates an inclined plane in the sample region 720. The inclined light sheet 724 also extends over a plurality of depths in the sample A, B, C, D.

Figure 7 includes a detailed inset view of the sample region 720 being illuminated by the axial light sheet 718 and the inclined light sheet 724.

In both cases, the illuminated plane of the sample produces light (e.g. by fluorescence), which is captured by the objective lens assembly 716 and directed to a multi-plane optical assembly 726. This directs the light from different depths A, B, C, D in the sample region 720 to different sections of an image sensor 728.

The movable mirror 710 rotates to sweep the axial or inclined light sheet 718, 724 through the sample. Respective rows of the image sensor 728 are sensed at the same rate. Figure 7 includes a detailed inset view of the image sensor 728, with the sections of the image sensor 728 that correspond to different depths in the sample region highlighted for both axial and inclined illumination. When an inclined illumination sheet is used, the sections of the image sensor 728 that correspond to different depths in the sample region are offset. This offset is taken into account when processing the sensed data to produce a three-dimensional image of the sample region 720.

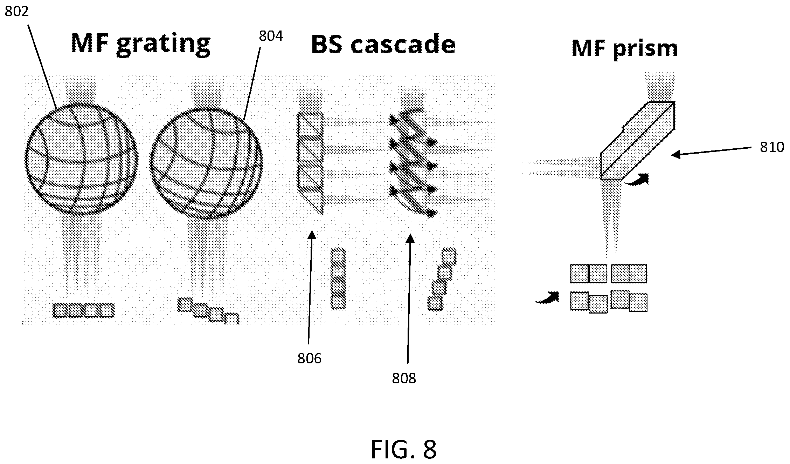

Figure 8 shows some examples of multi-plane optical assemblies suitable for use in embodiments of the invention. A first multi-plane optical assembly 802 comprises an multi-focus (MF) grating, arranged for use with axial illumination. A second multi-plane optical assembly 804 also comprises a MF grating. However the second multi-plane optical assembly 804 is rotated relative to the first multi-plane optical assembly 802 so that it is arranged for use with inclined illumination.

A third multi-plane optical assembly 806 comprises a beam splitter (BS) cascade arranged for use with axial illumination. A fourth multi-plane optical assembly 808 also comprises a BS cascade. The BS cascades 806, 808 each comprise several beamsplitter cubes and a prism mirror. Each of the components of the fourth multi-plane optical assembly 808 are rotated relative to those of the third multi-plane optical assembly 806 so that it is arranged for use with inclined illumination.

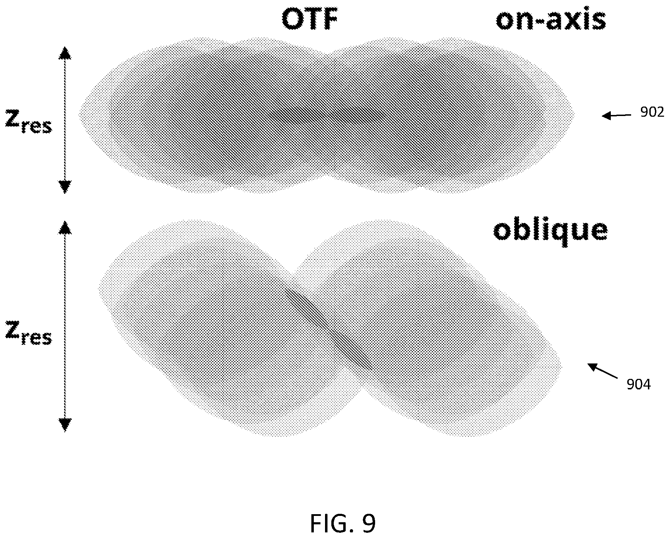

A fifth multi-plane optical assembly 810 comprises a multi-focus (MF) prism. The MF prism may be rotated as appropriate for use with axial and inclined illumination. Figure 9 shows example optical transfer functions (OTF) for apparatuses using axial and inclined illumination. A first OTF 902 is for an apparatus that uses axial illumination. A second OTF 904 is for an apparatus that uses inclined illumination. The apparatuses are otherwise identical.

Figure 9 shows how the second OTF 904 (inclined illumination) extends further in the z-direction, indicating improved axial resolution. More generally, the second OTF 904 (inclined illumination) extends over a greater area than the first OTF 902, indicating that more information along the axial direction may be recoverable from the sample region using inclined illumination.

Although embodiments have been shown with features such as the sample region, the image sensor, etc. having particular orientations, it will be appreciated that these may differ in other embodiments, with references herein to "vertical", "horizontal", "width", "height", etc. being adapted accordingly. More generally, a "depth" within a sample region is not limited to being in any particular orientation. While the invention has been described in detail in connection with only a limited number of embodiments, it should be readily understood that the invention is not limited to such disclosed embodiments. Rather, the invention can be modified to incorporate any number of variations, alterations, substitutions not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An apparatus for volumetric imaging, comprising:
an illumination assembly (8; 108; 208) arranged to direct light to illuminate a plurality of planes (22, 24; 124; 222) in a sample region (4; 104) sequentially at an illumination rate, each plane (22, 24; 104; 222) extending over a plurality of depths (22a, 22b, 22c, 22d; 222a, 222b, 222c, 222d) in the sample region (4; 104);
an image sensor (6; 106; 206) comprising a plurality of sections (12; 114; 212) of pixels and arranged to sense each section (12, 14; 114; 212) of pixels sequentially at a sensing rate; and
a light-receiving assembly arranged to receive light from the sample region (4; 104), **characterised in that**:
the light-receiving assembly is arranged to direct light received from each of said planes (22, 24; 124; 222) in the sample region to a different respective section (12, 14; 114; 212) of said sections of pixels,
wherein the light-receiving assembly comprises a multi-plane optical assembly (10; 110; 210) arranged to receive light from the plurality of depths (22a, 22b, 22c, 22d; 222a, 222b, 222c, 222d) in the sample region (4; 104) and, for each section (12, 14; 114; 212) of said sections of pixels, to direct light simultaneously from each of the plurality of depths (22a, 22b, 22c, 22d; 222a, 222b, 222c, 222d) in the respective plane (22, 24; 124; 222) to a different respective subsection (12a, 12b, 12c, 12d; 114a, 114c; 212a, 212b, 212c, 212d) of said section (12, 14; 114; 212); and wherein the illumination rate is equal to the sensing rate, such that each section (12, 14; 114; 212) of pixels is arranged to sense light from the plurality of depths (22a, 22b, 22c, 22d; 222a, 222b, 222c, 222d) in the respective plane (22, 24; 124; 222) as the plane is illuminated by the illumination assembly (8; 108; 208).

2. The apparatus as claimed in claim 1, wherein them multi-plane optical assembly (10; 110; 210) is arranged to direct light simultaneously from each of at least four depths (22a, 22b, 22c, 22d; 222a, 222b, 222c, 222d) to different respective subsections (12a, 12b, 12c, 12d; 212a, 212b, 212c, 212d) of the image sensor (6; 106; 206).

3. The apparatus as claimed in any preceding claim, wherein the multi-plane optical assembly (10; 110; 210) comprises a multi-plane prism or a multi-plane diffraction grating.

4. The apparatus as claimed in any preceding claim, wherein the electronic image sensor (6; 106; 206) comprises electronic shutter circuitry arranged to selectively sense from pixels in each section (12, 14; 114; 212) of the image sensor (6; 106; 206) in sequential electronic-shutter periods.

5. The apparatus as claimed in any preceding claim, arranged to volumetrically image the sample region (4; 104) repeatedly over time to generate image data representing a time series of volumes of the sample region (4; 104).

6. The apparatus as claimed in any preceding claim, wherein the light-receiving assembly comprises an objective lens assembly (20; 220) arranged to pass light emanating from the sample region (4; 104) to the multi-plane optical assembly (10; 110; 210).

7. The apparatus as claimed in claim 6, wherein the objective lens assembly (20; 220) also forms part of the illumination assembly (8; 108; 208) and is arranged to pass light from the illumination assembly (8; 108; 208) into the sample region (4; 104).

8. The apparatus as claimed in claim 6 or 7, wherein at least one of the plurality of planes (222) is inclined to an imaging axis of the objective lens assembly (220).

9. The apparatus as claimed in any preceding claim, wherein the illumination assembly (8; 108; 208) is arranged to generate a light sheet and to sweep or step the light sheet across the sample region (4; 104) to illuminate said plurality of planes (22, 24; 124; 222).

10. The apparatus as claimed in any preceding claim, wherein the plurality of planes (22, 24; 124; 222) are parallel planes.

11. The apparatus as claimed in any preceding claim, wherein each subsection (12a, 12b, 12c, 12d; 114a, 114c; 212a, 212b, 212c, 212d) consists of a respective contiguous set of pixels.

12. The apparatus as claimed in any preceding claim, wherein each of the sections (12, 14; 124; 212) of pixels comprises a respective line of pixels, and wherein the image sensor (6; 106; 206) is arranged to sense adjacent lines sequentially.

13. The apparatus as claimed in any preceding claim, comprising a second image sensor (107) comprising a plurality of sections (115) and arranged to sense sequentially each section (115) of pixels at the sensing rate, wherein the multi-plane optical assembly (110) is arranged to direct light simultaneously from each of a second plurality of depths in the sample region to a respective subsection (115b, 115d) of each section (115) of pixels of the second image sensor (107).

14. The apparatus as claimed in any preceding claim, arranged to perform fluorescence volumetric microscopy of a sample (3) in the sample region (4; 104).

15. A method of volumetric imaging, the method comprising:
directing light to illuminate a plurality of planes (22, 24; 124; 222) in a sample region (4; 104) sequentially at an illumination rate, each plane extending over a plurality of depths (22a, 22b, 22c, 22d; 222a, 222b, 222c, 222d) in the sample region (4; 104);
directing light emanating from the sample region (4; 104) to an image sensor (6; 106; 206), wherein the image sensor (6; 106; 206) comprises a plurality of sections (12, 14; 114; 212) of pixels,
**characterised by**:
directing light received from each of said planes (22, 24; 124; 222) in the sample region (4; 104) to a different respective section of said sections (12, 14; 114; 212) of pixels, and wherein, for each section (12, 14; 114; 212) of said sections of pixels, light is directed simultaneously from each of the plurality of depths (22a, 22b, 22c, 22d; 222a, 222b, 222c, 222d) in the respective plane (22, 24; 124; 222) to a different respective subsection (12a, 12b, 12c, 12d; 114a, 114c; 212a, 212b, 212c, 212d) of said section (12, 14; 114; 212);
the image sensor (6; 106; 206) sensing each of said sections (12, 14; 114; 212) sequentially at a sensing rate, wherein the sensing rate is equal to the illumination rate, such that each section (12, 14; 114; 212) of pixels senses light from the plurality of depths in the respective plane (22, 24; 124; 222) as the plane is illuminated.

## Patentansprüche

1. Einrichtung zur volumetrischen Bildgebung, umfassend:
eine Beleuchtungsanordnung (8; 108; 208), die so angeordnet ist, dass sie Licht lenkt, um eine Vielzahl von Ebenen (22, 24; 124; 222) in einem Probenbereich (4; 104) sequenziell mit einer Beleuchtungsrate zu beleuchten, wobei sich jede Ebene (22, 24; 104; 222) über eine Vielzahl von Tiefen (22a, 22b, 22c, 22d; 222a, 222b, 222c, 222d) im Probenbereich (4; 104) erstreckt;
einen Bildsensor (6; 106; 206), der eine Vielzahl von Abschnitten (12; 114; 212) von Pixeln umfasst und so angeordnet ist, dass er jeden Abschnitt (12, 14; 114; 212) von Pixeln sequenziell mit einer Erfassungsrate erfasst; und
eine lichtempfangende Anordnung, die so angeordnet ist, dass sie Licht aus dem Probenbereich (4; 104) empfängt, **dadurch gekennzeichnet, dass**:
die lichtempfangende Anordnung so angeordnet ist, dass sie Licht, das von jeder der Ebenen (22, 24; 124; 222) im Probenbereich empfangen wird, auf einen anderen jeweiligen Abschnitt (12, 14; 114; 212) der Pixelabschnitte lenkt,
wobei die lichtempfangende Anordnung eine optische Mehrebenen-Anordnung (10; 110; 210) umfasst, die so angeordnet ist, dass sie Licht aus der Vielzahl von Tiefen (22a, 22b, 22c, 22d; 222a, 222b, 222c, 222d) im Probenbereich (4; 104) empfängt und für jeden Abschnitt (12, 14; 114; 212) der Pixelabschnitte gleichzeitig Licht aus jeder der Vielzahl von Tiefen (22a, 22b, 22c, 22d; 222a, 222b, 222c, 222d) in der jeweiligen Ebene (22, 24; 124; 222) auf einen anderen jeweiligen Unterabschnitt (12a, 12b, 12c, 12d; 114a, 114c; 212a, 212b, 212c, 212d) des Abschnitts (12, 14; 114; 212) lenkt; und wobei die Beleuchtungsrate der Erfassungsrate entspricht, so dass jeder Abschnitt (12, 14; 114; 212) von Pixeln so angeordnet ist, dass er Licht aus der Vielzahl von Tiefen (22a, 22b, 22c, 22d; 222a, 222b, 222c, 222d) in der jeweiligen Ebene (22, 24; 124; 222) erfasst, während die Ebene von der Beleuchtungsanordnung (8; 108; 208) beleuchtet wird.

2. Einrichtung nach Anspruch 1, wobei die optische Mehrebenen-Anordnung (10; 110; 210) so angeordnet ist, dass sie Licht gleichzeitig aus jeder von mindestens vier Tiefen (22a, 22b, 22c, 22d; 222a, 222b, 222c, 222d) auf verschiedene jeweilige Unterabschnitte (12a, 12b, 12c, 12d; 212a, 212b, 212c, 212d) des Bildsensors (6; 106; 206) lenkt.

3. Einrichtung nach einem der vorstehenden Ansprüche, wobei die optische Mehrebenen-Anordnung (10; 110; 210) ein Mehrebenen-Prisma oder ein Mehrebenen-Beugungsgitter umfasst.

4. Einrichtung nach einem der vorstehenden Ansprüche, wobei der elektronische Bildsensor (6; 106; 206) eine elektronische Verschlussschaltung umfasst, die so angeordnet ist, dass sie Pixel in jedem Abschnitt (12, 14; 114; 212) des Bildsensors (6; 106; 206) in sequenziellen elektronischen Verschlussperioden selektiv erfasst.

5. Einrichtung nach einem der vorstehenden Ansprüche, die so angeordnet ist, dass sie den Probenbereich (4; 104) im Laufe der Zeit wiederholt volumetrisch abbildet, um Bilddaten zu erzeugen, die eine Zeitreihe von Volumina des Probenbereichs (4; 104) darstellen.

6. Einrichtung nach einem der vorstehenden Ansprüche, wobei die lichtempfangende Anordnung eine Objektivlinsenanordnung (20; 220) umfasst, die so angeordnet ist, dass sie Licht, das aus dem Probenbereich (4; 104) austritt, an die optische Mehrebenen-Anordnung (10; 110; 210) weiterleitet.

7. Einrichtung nach Anspruch 6, wobei die Objektivlinsenanordnung (20; 220) auch einen Teil der Beleuchtungsanordnung (8; 108; 208) bildet und so angeordnet ist, dass sie Licht von der Beleuchtungsanordnung (8; 108; 208) in den Probenbereich (4; 104) weiterleitet.

8. Einrichtung nach Anspruch 6 oder 7, wobei mindestens eine der Vielzahl von Ebenen (222) zu einer Bildgebungsachse der Objektivlinsenanordnung (220) geneigt ist.

9. Einrichtung nach einem der vorstehenden Ansprüche, wobei die Beleuchtungsanordnung (8; 108; 208) so angeordnet ist, dass sie ein Lichtblatt erzeugt und das Lichtblatt über den Probenbereich (4; 104) hinweg abtastet oder schrittweise bewegt, um die Vielzahl von Ebenen (22, 24; 124; 222) zu beleuchten.

10. Einrichtung nach einem der vorstehenden Ansprüche, wobei die Vielzahl von Ebenen (22, 24; 124; 222) parallele Ebenen sind.

11. Einrichtung nach einem der vorstehenden Ansprüche, wobei jeder Unterabschnitt (12a, 12b, 12c, 12d; 114a, 114c; 212a, 212b, 212c, 212d) aus einem jeweiligen zusammenhängenden Satz aus Pixeln besteht.

12. Einrichtung nach einem der vorstehenden Ansprüche, wobei jeder der Abschnitte (12, 14; 124; 212) von Pixeln eine jeweilige Linie von Pixeln umfasst, und wobei der Bildsensor (6; 106; 206) so angeordnet ist, dass er benachbarte Linien sequenziell erfasst.

13. Einrichtung nach einem der vorstehenden Ansprüche, umfassend einen zweiten Bildsensor (107), der eine Vielzahl von Abschnitten (115) umfasst und so angeordnet ist, dass er jeden Abschnitt (115) von Pixeln mit der Erfassungsrate sequenziell erfasst, wobei die optische Mehrebenen-Anordnung (110) so angeordnet ist, dass sie Licht gleichzeitig aus jeder einer zweiten Vielzahl von Tiefen im Probenbereich zu einem jeweiligen Unterabschnitt (115b, 115d) jedes Abschnitts (115) von Pixeln des zweiten Bildsensors (107) lenkt.

14. Einrichtung nach einem der vorstehenden Ansprüche, die so angeordnet ist, dass sie eine volumetrische Fluoreszenzmikroskopie einer Probe (3) im Probenbereich (4; 104) durchführt.

15. Verfahren zur volumetrischen Bildgebung, wobei das Verfahren Folgendes umfasst:
Lenken von Licht, um eine Vielzahl von Ebenen (22, 24; 124; 222) in einem Probenbereich (4; 104) sequenziell mit einer Beleuchtungsrate zu beleuchten, wobei sich jede Ebene über eine Vielzahl von Tiefen (22a, 22b, 22c, 22d; 222a, 222b, 222c, 222d) im Probenbereich (4; 104) erstreckt;
Lenken von Licht, das aus dem Probenbereich (4; 104) austritt, auf einen Bildsensor (6; 106; 206), wobei der Bildsensor (6; 106; 206) eine Vielzahl von Abschnitten (12, 14; 114; 212) von Pixeln umfasst,
**gekennzeichnet durch**:
Lenken von Licht, das von jeder der Ebenen (22, 24; 124; 222) in dem Probenbereich (4; 104) empfangen wird, auf einen anderen jeweiligen Abschnitt der Abschnitte (12, 14; 114; 212) von Pixeln, und wobei für jeden Abschnitt (12, 14; 114; 212) der Abschnitte von Pixeln gleichzeitig Licht aus jeder der Vielzahl von Tiefen (22a, 22b, 22c, 22d; 222a, 222b, 222c, 222d) in der jeweiligen Ebene (22, 24; 124; 222) zu einem anderen jeweiligen Unterabschnitt (12a, 12b, 12c, 12d; 114a, 114c; 212a, 212b, 212c, 212d) des Abschnitts (12, 14; 114; 212) gelenkt wird;
wobei der Bildsensor (6; 106; 206) jeden der Abschnitte (12, 14; 114; 212) sequenziell mit einer Erfassungsrate erfasst, wobei die Erfassungsrate der Beleuchtungsrate entspricht, so dass jeder Abschnitt (12, 14; 114; 212) von Pixeln Licht aus der Vielzahl von Tiefen in der jeweiligen Ebene (22, 24; 124; 222) erfasst, während die Ebene beleuchtet wird.

## Revendications

1. Appareil pour une imagerie volumétrique, comprenant :
un ensemble d'éclairage (8 ; 108 ; 208) agencé pour orienter la lumière afin d'éclairer séquentiellement une pluralité de plans (22, 24 ; 124 ; 222) dans une région (4 ; 104) d'échantillon à une vitesse d'éclairage, chaque plan (22, 24 ; 104 ; 222) s'étendant sur une pluralité de profondeurs (22a, 22b, 22c, 22d ; 222a, 222b, 222c, 222d) dans la région (4 ; 104) d'échantillon ;
un capteur (6 ; 106 ; 206) d'image comprenant une pluralité de sections (12 ; 114 ; 212) de pixels et agencé pour détecter chaque section (12, 14 ; 114 ; 212) de pixels séquentiellement à une vitesse de détection ; et
un ensemble de réception de lumière agencé pour recevoir la lumière provenant de la région (4 ; 104) d'échantillon, **caractérisé en ce que** :
l'ensemble de réception de lumière est agencé pour orienter la lumière reçue de chacun desdits plans (22, 24 ; 124 ; 222) dans la région d'échantillon vers une section (12, 14 ; 114 ; 212) respective différente parmi lesdites sections de pixels, dans lequel l'ensemble de réception de lumière comprend un ensemble optique (10 ; 110 ; 210) à plans multiples agencé pour recevoir la lumière provenant de la pluralité de profondeurs (22a, 22b, 22c, 22d ; 222a, 222b, 222c, 222d) dans la région (4 ; 104) d'échantillon et, pour chaque section (12, 14 ; 114 ; 212) desdites sections de pixels, pour orienter simultanément la lumière provenant de chacune de la pluralité de profondeurs (22a, 22b, 22c, 22d ; 222a, 222b, 222c, 222d) dans le plan (22, 24 ; 124 ; 222) respectif vers une sous-section (12a, 12b, 12c, 12d ; 114a, 114c ; 212a, 212b, 212c, 212d) respective différente de ladite section (12, 14 ; 114 ; 212) ; et dans lequel la vitesse d'éclairage est égale à la vitesse de détection, de sorte que chaque section (12, 14 ; 114 ; 212) de pixels soit agencée pour détecter la lumière provenant de la pluralité de profondeurs (22a, 22b, 22c, 22d ; 222a, 222b, 222c, 222d) dans le plan (22, 24 ; 124 ; 222) respectif lorsque le plan est éclairé par l'ensemble d'éclairage (8 ; 108 ; 208).

2. Appareil selon la revendication 1, dans lequel l'ensemble optique (10 ; 110 ; 210) à plans multiples est agencé pour orienter simultanément la lumière provenant d'au moins quatre profondeurs (22a, 22b, 22c, 22d ; 222a, 222b, 222c, 222d) vers différentes sous-sections (12a, 12b, 12c, 12d ; 212a, 212b, 212c, 212d) respectives du capteur (6 ; 106 ; 206) d'image.

3. Appareil selon une quelconque revendication précédente, dans lequel l'ensemble optique (10 ; 110 ; 210) à plans multiples comprend un prisme à plans multiples ou un réseau de diffraction à plans multiples.

4. Appareil selon une quelconque revendication précédente, dans lequel le capteur (6 ; 106 ; 206) d'image électronique comprend un circuit d'obturation électronique agencé pour détecter sélectivement les pixels dans chaque section (12, 14 ; 114 ; 212) du capteur (6 ; 106 ; 206) d'image lors de périodes d'obturation électronique séquentielles.

5. Appareil selon une quelconque revendication précédente, agencé pour imager volumétriquement la région (4 ; 104) d'échantillon de façon répétée dans le temps afin de générer des données d'image représentant une série temporelle de volumes de la région (4 ; 104) d'échantillon.

6. Appareil selon une quelconque revendication précédente, dans lequel l'ensemble de réception de lumière comprend un ensemble objectif (20 ; 220) agencé pour faire passer la lumière émanant de la région (4 ; 104) d'échantillon vers l'ensemble optique (10 ; 110 ; 210) à plans multiples.

7. Appareil selon la revendication 6, dans lequel l'ensemble objectif (20 ; 220) fait également partie de l'ensemble d'éclairage (8 ; 108 ; 208) et est agencé pour faire passer la lumière de l'ensemble d'éclairage (8 ; 108 ; 208) dans la région (4 ; 104) d'échantillon.

8. Appareil selon la revendication 6 ou la revendication 7, dans lequel au moins un de la pluralité de plans (222) est incliné par rapport à un axe d'imagerie de l'ensemble objectif (220).

9. Appareil selon une quelconque revendication précédente, dans lequel l'ensemble d'éclairage (8 ; 108 ; 208) est agencé pour générer un feuillet de lumière et pour balayer ou déplacer le feuillet de lumière à travers la région (4 ; 104) d'échantillon afin d'éclairer ladite pluralité de plans (22, 24 ; 124 ; 222).

10. Appareil selon une quelconque revendication précédente, dans lequel la pluralité de plans (22, 24 ; 124 ; 222) sont des plans parallèles.

11. Appareil selon une quelconque revendication précédente, dans lequel chaque sous-section (12a, 12b, 12c, 12d ; 114a, 114c ; 212a, 212b, 212c, 212d) consiste en un ensemble contigu respectif de pixels.

12. Appareil selon une quelconque revendication précédente, dans lequel chacune des sections (12, 14 ; 124 ; 212) de pixels comprend une ligne respective de pixels, et dans lequel le capteur (6 ; 106 ; 206) d'image est agencé pour détecter séquentiellement des lignes adjacentes.

13. Appareil selon une quelconque revendication précédente, comprenant un deuxième capteur (107) d'image comprenant une pluralité de sections (115) et agencé pour détecter séquentiellement chaque section (115) de pixels à la vitesse de détection, dans lequel l'ensemble optique (110) à plans multiples est agencé pour orienter simultanément la lumière provenant de chacune d'une deuxième pluralité de profondeurs dans la région d'échantillon vers une sous-section (115b, 115d) respective de chaque section (115) de pixels du deuxième capteur (107) d'image.

14. Appareil selon une quelconque revendication précédente, agencé pour réaliser une microscopie volumétrique par fluorescence d'un échantillon (3) dans la région (4 ; 104) d'échantillon.

15. Procédé d'imagerie volumétrique, le procédé comprenant :
l'orientation de la lumière pour éclairer séquentiellement une pluralité de plans (22, 24 ; 124 ; 222) dans une région (4 ; 104) d'échantillon à une vitesse d'éclairage, chaque plan s'étendant sur une pluralité de profondeurs (22a, 22b, 22c, 22d ; 222a, 222b, 222c, 222d) dans la région (4 ; 104) d'échantillon ;
l'orientation de la lumière émanant de la région (4 ; 104) d'échantillon vers un capteur (6 ; 106 ; 206) d'image, dans lequel le capteur (6 ; 106 ; 206) d'image comprend une pluralité de sections (12, 14 ; 114 ; 212) de pixels,
**caractérisé par** :
l'orientation de la lumière reçue de chacun desdits plans (22, 24 ; 124 ; 222) dans la région (4 ; 104) d'échantillon vers une section respective différente parmi lesdites sections (12, 14 ; 114 ; 212) de pixels, et dans lequel, pour chaque section (12, 14 ; 114 ; 212) desdites sections de pixels, la lumière est orientée simultanément depuis chacune de la pluralité de profondeurs (22a, 22b, 22c, 22d ; 222a, 222b, 222c, 222d) dans le plan (22, 24 ; 124 ; 222) respectif vers une sous-section (12a, 12b, 12c, 12d ; 114a, 114c ; 212a, 212b, 212c, 212d) respective différente de ladite section (12, 14 ; 114 ; 212) ;
la détection, par le capteur (6 ; 106 ; 206) d'image, de chacune desdites sections (12, 14 ; 114 ; 212) séquentiellement à une vitesse de détection, dans lequel la vitesse de détection est égale à la vitesse d'éclairage, de sorte que chaque section (12, 14 ; 114 ; 212) de pixels détecte la lumière provenant de la pluralité de profondeurs dans le plan (22, 24 ; 124 ; 222) respectif lorsque le plan est éclairé.
